(19) **Europäisches Patentamt**

**European Patent Office**

**Office européen des brevets**

(11) Veröffentlichungsnummer: **0 273 172 B1**

(12) **EUROPÄISCHE PATENTSCHRIFT**

(45) Veröffentlichungstag der Patentschrift: **31.07.91**

(51) Int. Cl.⁵: **B27B 25/02**

(21) Anmeldenummer: **87116912.4**

(22) Anmeldetag: **17.11.87**

(54) Transportwalze für den Vorschub von Werkstücken aus Holz, holzähnlichen Materialien oder Kunststoff.

---

(30) Priorität: **22.11.86 DE 3639938**

(43) Veröffentlichungstag der Anmeldung:
**06.07.88 Patentblatt 88/27**

(45) Bekanntmachung des Hinweises auf die
Patenterteilung:
**31.07.91 Patentblatt 91/31**

(84) Benannte Vertragsstaaten:
**AT BE CH DE ES FR GB GR IT LI LU NL SE**

(56) Entgegenhaltungen:
**DE-C- 64 284**     **FR-A- 1 563 007**
**FR-A- 2 380 853**    **US-A- 1 363 593**
**US-A- 1 374 777**    **US-A- 1 514 505**
**US-A- 1 515 436**    **US-A- 4 385 650**

(73) Patentinhaber: **Michael Weinig Aktiengesellschaft**
**Weinigstrasse 2/4**
**W-6972 Tauberbischofsheim(DE)**

(72) Erfinder: **Mott, Heinz**
**Taubenhausweg 15**
**W-6972 Tauberbischofsheim(DE)**

(74) Vertreter: **Kohl, Karl-Heinz et al**
**Patentanwälte Dipl.-Ing. A.K. Jackisch-Kohl**
**Dipl.-Ing. K.H. Kohl Stuttgarter Strasse 115**
**W-7000 Stuttgart 30(DE)**

## Beschreibung

Die Erfindung betrifft eine Transportwalze für den Vorschub von Werkstücken aus Holz, holzähnlichen Materialien oder Kunststoff nach dem Oberbegriff des Anspruches 1.

Solche Transportwalzen werden beispielsweise bei Holzbearbeitungsmaschinen verwendet und dienen dazu, die in dieser Maschine zu bearbeitenden Hölzer auf einem Auflagetisch zu transportieren. Die Transportwalzen werden mit einer Andruckkraft gegen die zu transportierenden Hölzer gedrückt und gedreht. Die Zähne greifen in die Oberseite der Hölzer ein und erteilen ihnen beim Drehen eine Vorschubkraft. Aus Festigkeitsgründen sind die Zähne dieser Transportwalze verhältnismäßig breit, d.h. die Zähne haben einen entsprechend großen Keilwinkel, der in der Größenordnung von etwa 60° liegt. Bei einer vorgegebenen Andruckkraft können darum die Zähne nur relativ gering in das Holz eindringen. Die Eindringtiefe ist aber entscheidend für die Übertragbarkeit der Umfangskraft der Transportwalze auf die Vorschubkraft des Holzes. Darum werden die Transportwalzen mit einer verhältnismäßig großen Andruckkraft gegen das zu transportierende Holz gedrückt. Dadurch steigt aber auch die Anpreßkraft des Holzes auf dem Auflagetisch und damit erhöht sich der Reibungswiderstand. Infolge der breiten Ausbildung der Zähne greifen sie nicht radial in das Holz ein, sondern sie schälen eine Vertiefung aus der Oberfläche des Holzes. Am vorderen Rand jeder dieser Vertiefungen hängt das herausgeschälte Holzmaterial als deutlich sichtbarer Span. Darum muß dieses Holz nach dem Durchlauf unter der Transportwalze noch bearbeitet werden.

Es ist bei einer anderen bekannten Transportwalze (US-A 43 85 650) vorgesehen, die Zähne konisch auszubilden. Sie dringen dadurch verhältnismäßig weit in das zu transportierende Holz ein und beschädigen es dabei. Aus diesem Grunde ist aus dieser Druckschrift auch bekannt, die Zähne als viereckige Pyramiden auszubilden. Diese pyramidenförmigen Zähne können wegen ihres kleinen Keilwinkels bei einer vorgegebenen Andruckkraft der Transportwalze verhältnismäßig tief in das zu transportierende Werkstück eindringen und dadurch deutliche Spuren auf der Werkstückoberfläche hinterlassen. Dadurch ist eine Nachbearbeitung des Werkstückes erforderlich. Außerdem haben die Zähne wegen ihres geringen Keilwinkels eine verhältnismäßig geringe Festigkeit, so daß die Gefahr besteht, daß sie bei einer entsprechend hohen Andruckkraft der Transportwalze abbrechen.

Der Erfindung liegt die Aufgabe zugrunde, die gattungsgemäße Transportwalze so auszuarbeiten, daß ihre Zähne trotz des kleinen Keilwinkels eine hohe Festigkeit haben und nur wenig in das zu transportierende Werkstück eindringen.

Diese Aufgabe wird bei der gattungsgemäßen Transportwalze erfindungsgemäß mit den kennzeichnenden Merkmalen des Anspruches 1 gelöst.

Bei der erfindungsgemäßen Transportwalze sind die Zähne mit einem verdickten Bereich ausgebildet, so daß sie eine hohe Festigkeit aufweisen. Die Zähne können darum schlank ausgebildet sein, ohne daß die Gefahr besteht, daß sie bei einer höheren Andruckkraft der Transportwalze abbrechen. Gleichzeitig verhindert der verdickte Bereich der Zähne aber auch, daß sie zu tief in das zu transportierende Werkstück eindringen. Dadurch wird eine Spanbildung verhindert, so daß die Oberseite des Werkstückes nur wenig angegriffen wird.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen

Fig. 1  in schematischer Darstellung zwei erfindungsgemäße Transportwalzen, die in Eingriff mit einem auf einem Tisch zu transportierenden Holz sind,

Fig. 2  in vergrößerter Darstellung einen Teil der erfindungsgemäßen Transportwalze.

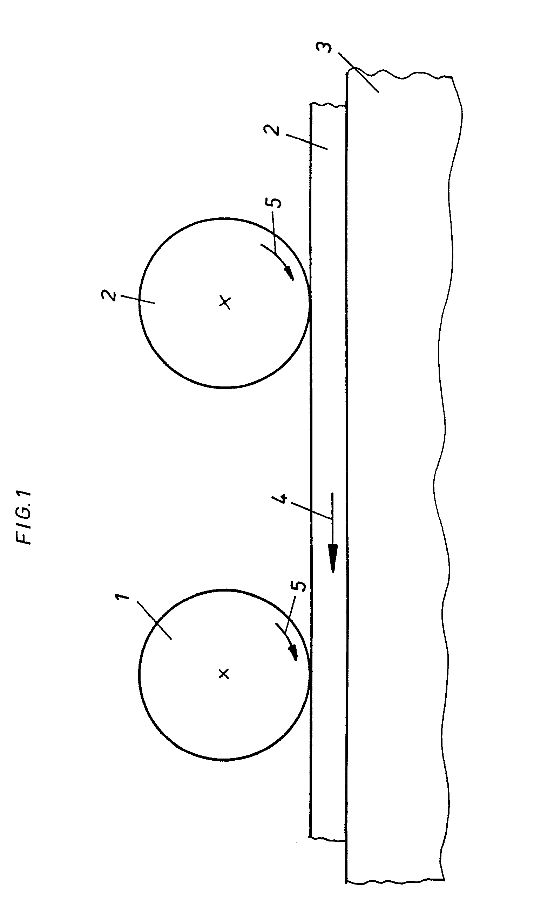

Mit den Transportwalzen 1 werden Hölzer 2 auf einer Unterlage 3, vorzugsweise einem Auflagetisch, in Vorschubrichtung 4 transportiert. Die Transportwalzen 1 werden in Richtung 5 um ihre Achse rotierend angetrieben. Um die Vorschubkraft auf das Holz 2 übertragen zu können, sind die Transportwalzen 1 an ihrem Umfang mit in Fig. 1 nicht dargestellten Zähnen versehen, die geringfügig in das Holz 2 eingreifen und es in Vorschubrichtung 4 transportieren.

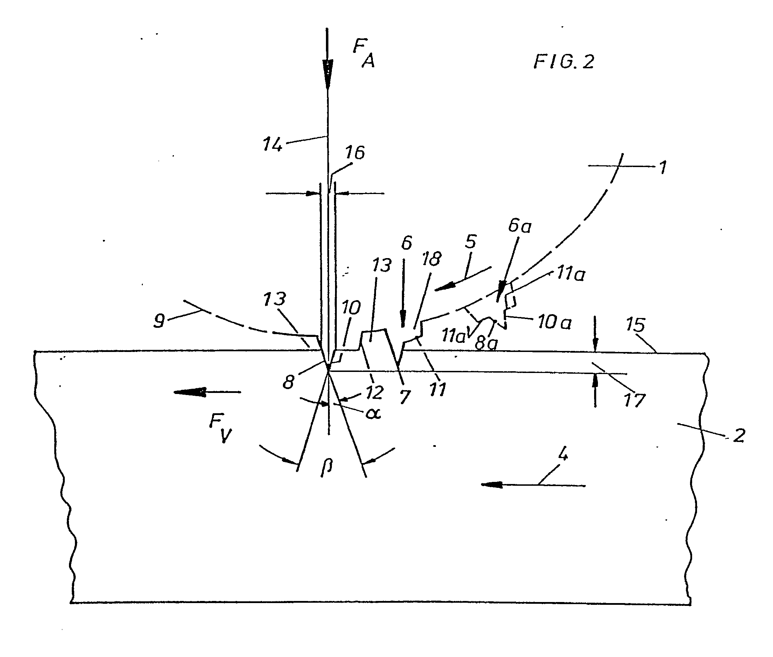

Die Zähne 6 (Fig. 2) sind über den Umfang der Transportwalze 1 verteilt angeordnet und können sich über die Länge der Transportwalze erstrecken. Die über die Länge der Transportwalze 1 sich erstreckenden Zähne 6 können auch in Einzelzähne unterteilt sein, wodurch sich die Zahneindringtiefe in das Holz 2, der Selbstreinigungseffekt und das Transportverhalten trotz Verkürzung der Zahnlänge verbessert. Die Transportwalze 1 kann darüber hinaus mit einer Gerad- oder auch einer Schrägverzahnung versehen sein. Bei einer Geradverzahnung ist die Durchzugskraft am Holz 2 besser als bei einer Schrägverzahnung.

Der Zahn 6 läuft in einer Spitze 7 aus und hat einen Keilwinkel β, der kleiner als etwa 50° ist und vorzugsweise in einem Bereich zwischen etwa 30° und etwa 40° liegt. Der Zahn 6 ist darum verhältnismäßig spitz. Die in Drehrichtung 5 vorn liegende Stirnseite 8 des Zahnes 6 verläuft gerade und schließt an die Umfangsfläche 9 der Transportwalze 1 stumpfwinklig an. Die in Drehrichtung 5 hintere Stirnseite 10 des Zahnes 6 ist kürzer als die Stirnseite 8 und schließt stumpfwinklig an eine Anschlagfläche 11 an, die sich von der Stirnseite 10 aus entgegen Drehrichtung 5 nach hinten etwa parallel zur Umfangsfläche 9 der Transportwalze 1 erstreckt und an eine stumpfwinklig zu ihr liegende Stirnseite 12 anschließt, die ihrerseits stumpfwinklig an die Umfangsfläche 9 der Transportwalze 1 anschließt. Der Zahn 6 hat einen Eingriffswinkel $\alpha$, der kleiner als etwa 25° ist und vorzugsweise im Bereich zwischen etwa 15° und etwa 20° liegt.

Zwischen aufeinanderfolgenden Zähnen 6 befindet sich jeweils ein Spanaufnahmeraum 13, der in Drehrichtung 5 nach vorn durch die Stirnseite 12 des in Drehrichtung folgenden Zahnes 6 und in Drehrichtung 5 nach hinten durch die Stirnseite 8 des nachfolgenden Zahnes begrenzt wird. Die Spanaufnahmeräume 13 sind verhältnismäßig groß, so daß in ihnen die beim Vorschub eventuell gebildeten Holzspäne sicher aufgenommen werden können und aus ihm auch problemlos herausfallen. Dadurch hat die Transportwalze 1 einen guten Selbstreinigungseffekt. Bevor die Zähne 6 in das zu transportierende Holz 2 eingreifen, sind darum die Spanaufnahmeräume 13 leer, so daß die Zähne gut in das Holz eindringen können. Dieser Selbstreinigungseffekt wird dann noch verbessert, wenn die Zähne über die axiale Länge der Transportwalze 1 unterteilt sind, also mit Abstand nebeneinander liegen. Dann können die in den Spanaufnahmeräumen 13 befindlichen Späne einwandfrei abgeführt werden.

Der Eingriffswinkel $\alpha$ ist zwischen der durch die Spitze 7 des Zahnes 6 gehenden Radialebene 14 und der Stirnseite 8 des Zahnes gemessen. Dieser Eingriffswinkel $\alpha$ ist im Vergleich zu den Zähnen der bekannten Transportwalzen wesentlich größer, bei denen dieser Eingriffswinkel im Bereich zwischen 0° und etwa 9° liegt. Dementsprechend sind auch die Keilwinkel $\beta$ dieser bekannten Zähne wesentlich größer und liegen oberhalb von 55°.

Die Eindrückkraft, mit der die Zähne 6 in das Holz 2 eingreifen, ist von der Dicke des Zahnes 6 in der Ebene der Holzoberseite 15 abhängig. Diese Dicke 16 des Zahnes 6, gemessen in der Holzoberseite 15, ist gering und ist um mehr als 50% kleiner als bei den herkömmlichen Zähnen der bekannten Transportwalzen. Dadurch ist für eine vorgegebene Eindringtiefe 17 der Zähne 6 in das Holz 2 nur eine geringe Anpreßkraft notwendig. Infolge des kleinen Keilwinkels $\beta$ können die Zähne 6 schon bei einer verhältnismäßig geringen, radial wirkenden Anpreßkraft $F_A$ ausreichend weit in das Holz 2 eingreifen, um es sicher zu erfassen und transportieren zu können. Trotz der kleinen Keilwinkel $\beta$ haben die Zähne 6 eine hohe Festigkeit, weil die Zähne im Bereich der Anschlagflächen 11 verstärkt ausgebildet sind. Dadurch erhalten die Zähne 6 eine ausreichend hohe Festigkeit. Zudem dienen die Anschlagflächen 11 dazu, ein zu tiefes Eindringen der Zähne in das Holz 2 zu verhindern. Trotz der geringen Andruckkraft $F_A$ wird eine ausreichend hohe Eindringtiefe 17 erreicht, so daß die von der Transportwalze 1 auf das Holz 2 ausgeübte Vorschubkraft $F_V$ hoch ist. Die geringe Andruckkraft $F_A$ hat den Vorteil, daß das Holz 2 nur wenig auf die Unterlage 3 gedrückt wird, so daß die Reibung zwischen dem Holz 2 und der Unterlage 3 verhältnismäßig gering ist. Es wird also eine hohe Vorschubkraft $F_V$ bei einer verhältnismäßig kleinen Andruckkraft $F_A$ erreicht. Das Holz 2 wird nur wenig zusammengedrückt, so daß auch der Verschleiß der Unterlage 3 gering ist. Schließlich können für den Antrieb der Transportwalze 1 leistungsschwächere Motoren verwendet werden.

Wegen des kleinen Keilwinkels $\beta$ reichen in der Regel kleine Andruckkräfte $F_A$ aus, um das Holz 2 zuverlässig in Vorschubrichtung 4 zu transportieren. Hierbei greifen die Zähne 6 mit der Eindringtiefe 17 in das Holz 2 ein. Hierbei tritt auch keine Spanbildung auf, so daß die Oberseite 15 des Holzes 2 nur wenig angegriffen wird. Erst bei hoher Belastung tritt ein Fräsvorgang der Zähne 6 im Holz 2 auf. Die hierbei entstehenden Holzspäne werden zuverlässig in den Spanaufnahmeräumen 13 aufgenommen. In Drehrichtung 5 unmittelbar vor den Zähnen 6 haben die Spanaufnahmeräume 13 ihre größte Tiefe, so daß die anfallenden Späne ohne Schwierigkeiten aufgenommen und mitgenommen werden können. Sobald die Zähne 6 wieder außer Eingriff mit dem Holz 2 sind, fallen die Holzspäne aus den Spanaufnahmeräumen 13 heraus, so daß diese Zähne nach einer Umdrehung der Transportwalze 1 wieder zuverlässig in das Holz 2 eingreifen können.

Um die Standzeit der Zähne 6 zu erhöhen, können sie aus Hartmetall bestehen. In diesem Falle ist die Anschlagfläche 11 bzw. der entsprechende verdickte Bereich 18, der sich über mindestens die halbe, im Ausführungsbeispiel etwa über 2/3 der radialen Länge der Zähne 6 erstreckt, gesondert vom Hartmetallzahn, der durch ein entsprechend geformtes Hartmetallplättchen gebildet wird. Es wird dann auf die Stirnseite dieses verdickten Bereiches 18 aufgelötet oder auf andere geeignete Weise befestigt. Der verdickte Bereich 18 dient dann als Stütze für den zu befestigenden Hartmetallzahn.

Da die Oberseite 15 des Holzes 2 durch den Eingriff der Transportwalze 1 nur wenig beschädigt wird, ergibt sich auch ein geringer Holzverbrauch, weil die Holzoberseite 15 nach dem Durchlauf unter der Transportwalze 1 nur wenig nachbearbeitet werden muß. Zudem werden durch die geringe Andruckkraft $F_A$ Bearbeitungsfehler verhindert, die sich sonst durch Zusammenpressen des Holzgefüges ergeben würden.

Fig. 2 zeigt eine weitere Ausführungsform eines Zahnes 6a. Er unterscheidet sich vom Zahn 6 nur dadurch, daß seine beiden Stirnseiten 8a, 10a jeweils stumpfwinklig an eine Anschlagfläche 11a, 11a′ anschließen. Der Zahn 6a ist somit spiegelsymmetrisch in bezug auf die zugehörige Radialebene ausgebildet. Im übrigen ist der Zahn 6a gleich ausgebildet wie der Zahn 6. Da er jedoch zwei Anschlagflächen 11a, 11a′ aufweist, hat die Transportwalze 1 keine bevorzugte Drehrichtung mehr, sondern kann in beiden Richtungen gedreht werden. Der vor der Anschlagfläche 11a′ befindliche Spanaufnahmeraum ist etwas kleiner als bei den Zähnen 6. Der Spanablauf bei Überlast der Zähne 6a ist jedoch immer noch ausreichend, so daß die Transportwalze mit den Zähnen 6a das Holz 2 einwandfrei transportieren kann.

## Patentansprüche

1. Transportwalze für den Vorschub von Werkstücken aus Holz, holzähnlichen Materialien oder Kunststoff, mit über den Umfang verteilt angeordneten Zähnen, die einen Keilwinkel kleiner als etwa 50° und einen Eingriffswinkel haben,
dadurch gekennzeichnet, daß die Zähne (6, 6a) einen verdickten Bereich (18) aufweisen, der eine an die Stirnseite (10, 8a, 10a) der Zähne (6, 6a) quer anschließende Anschlagfläche (11, 11a, 11a') zur Begrenzung der Eindringtiefe (17) der Zähne (6, 6a) in das Werkstück (2) aufweist.

2. Transportwalze nach Anspruch 1,
dadurch gekennzeichnet, daß der Keilwinkel (β) zwischen etwa 30° und etwa 40° liegt.

3. Transportwalze nach Anspruch 1 oder 2,
dadurch gekennzeichnet, daß der Eingriffswinkel (α) kleiner als etwa 25° ist.

4. Transportwalze nach einem der Ansprüche 1 bis 3,
dadurch gekennzeichnet, daß der Eingriffswinkel (α) zwischen etwa 15° und etwa 20° liegt.

5. Transportwalze nach einem der Ansprüche 1 bis 4,
dadurch gekennzeichnet, daß die Zähne (6) an ihrem in Drehrichtung (5) der Transportwalze (1) rückwärtigen Bereich mit der Verdickung (18) versehen sind.

6. Transportwalze nach einem der Ansprüche 1 bis 5,
dadurch gekennzeichnet, daß die Zähne (6a) auf beiden Seiten mit der Verdickung (18) versehen sind.

7. Transportwalze nach einem der Ansprüche 1 bis 6,
dadurch gekennzeichnet, daß die Anschlagfläche (11, 11a, 11a') etwa parallel zur Umfangsfläche (9) der Transportwalze (1) verläuft.

8. Transportwalze nach einem der Ansprüche 1 bis 7,
dadurch gekennzeichnet, daß sich der verdickte Bereich (18) über mindestens etwa die halbe, vorzugsweise über zwei Drittel der radialen Länge der Zähne (6, 6a) erstreckt, die vorzugsweise durch Hartmetallplatten gebildet sind, die auf dem verdickten Bereich (18) befestigt sind.

9. Transportwalze nach einem der Ansprüche 1 bis 8,
dadurch gekennzeichnet, daß der verdickte Bereich (18) mit Abstand dem jeweils nachfolgenden Zahn (6, 6a) gegenüberliegt.

10. Transportwalze nach einem der Ansprüche 1 bis 9,
zwischen deren in Umfangsrichtung benachbarten Zähnen jeweils ein Spanaufnahmeraum liegt, dadurch gekennzeichnet, daß der verdickte Bereich (18) den Spanaufnahmeraum (13) in Drehrichtung (5) der Transportwalze (1) nach vorn begrenzt.

11. Transportwalze nach einem der Ansprüche 1 bis 10,
dadurch gekennzeichnet, daß die Zähne (6, 6a) in eine Spitze (7) auslaufen.

## Claims

1. Conveyor roller for the feed of work-pieces consisting of wood, wood-like materials or synthetic materials, with teeth distributed over the periphery, which have a wedge angle less than approximately 50° and an angle of mesh, charcterised in that the teeth (6, 6a) have a thickened region (18), which comprises a stop face (11, 11a, 11a') for limiting the penetration depth (17) of the teeth (6, 6a) into the workpiece (2), which stop face transversely adjoins the front side (10, 8a, 10a) of the teeth (6, 6a).

2. Conveyor roller according to Claim 1, characterised in that the wedge angle ( β ) is between approximately 30° and approximately 40°.

3. Conveyor roller according to Claim 1 or 2, characterised in that the angle of mesh ($\alpha$) is less than approximately 25°.

4. Conveyor roller according to one of Claims 1 to 3, characterised in that the angle of mesh ($\alpha$) is between approximately 15° and approximately 20°.

5. Conveyor roller according to one of Claims 1 to 4, characterised in that the teeth (6) are provided with the thickened portion (18) on their rear region in the direction of rotation (5) of the conveyor roller (1).

6. Conveyor roller according to one of Claims 1 to 5, characterised in that the teeth (6a) are provided on both sides with the thickened portion (18).

7. Conveyor roller according to one of Claims 1 to 6, characterised in that the stop face (11, 11a, 11a') extends approximately parallel to the peripheral surface (9) of the conveyor roller (1).

8. Conveyor roller according to, one of Claims 1 to 7, characterised in that the thickened region (18) extends over at least approximately half, preferably over two-thirds of the radial length of the teeth (6, 6a), which are preferably formed by hard metal plates, which are attached to the thickened region (18).

9. Conveyor roller according to one of Claims 1 to 8, characterised in that the thickened region (18) is located opposite the respective successive tooth (6, 6a) at a distance therefrom.

10. Conveyor roller according to one of Claims 1 to 9, a chip-receiving space respectively being located between its adjacent teeth in the peripheral direction, characterised in that the thickened region (18) defines the chip-receiving space (13) at the front in the direction of rotation (5) of the conveyor roller (1).

11. Conveyor roller according to one of Claims 1 to 10, characterised in that the teeth (6, 6a) taper to a point (7).

**Revendications**

1. Cylindre d'alimentation pour l'avancement de pièces à usiner en bois, en matériaux ligneux ou en matière plastique, comprenant des dents réparties sur la circonférence, qui présentent un angle de taillant inférieur à environ 50° et un angle de pression, **caractérisé en ce** que les dents (6, 6a) comportent une zone plus épaisse (18) laquelle présente une surface d'arrêt (11, 11a, 11a') qui se raccorde transversalement à la face frontale (10, 8a, 10a) des dents (6, 6a) pour limiter la profondeur de pénétration (17) des dents (6, 6a) dans la pièce à usiner (2).

2. Cylindre d'alimentation selon la revendication 1, caractérisé en ce que l'angle de taillant ($\beta$) se situe entre environ 30° et environ 40°.

3. Cylindre d'alimentation selon l'une des revendications 1 ou 2, caractérisé en ce que l'angle de pression ($\alpha$) est inférieur à environ 25°.

4. Cylindre d'alimentation selon l'une des revendications 1 à 3, caractérisé en ce que l'angle de pression ($\alpha$) se situe entre environ 15° et environ 20°.

5. Cylindre d'alimentation selon l'une des revendications 1 à 4, caractérisé en ce que, dans leur région postérieure dans le sens de rotation (5) du cylindre d'alimentation (1), les dents (6) sont munies de l'épaississement (18).

6. Cylindre d'alimentation selon l'une des revendications 1 à 5, caractérisé en ce que les dents (6a) sont munies des deux côtés de l'épaississement (18).

7. Cylindre d'alimentation selon l'une des revendications 1 à 6, caractérisé en ce que la surface d'arrêt (11, 11a, 11a') s'étend à peu près parallèlement à la surface circonférentielle (9) du cylindre d'alimentation (1).

8. Cylindre d'alimentation selon l'une des revendications 1 à 7, caractérisé en ce que la zone plus épaisse (18) s'étend au moins sur environ la moitié, de préférence sur les deux tiers de la longueur radiale des dents (6, 6a) lesquelles sont constituées de préférence par des plaquettes de métal dur fixées sur la zone plus épaisse (18).

9. Cylindre d'alimentation selon l'une des revendications 1 à 8, caractérisé en ce que la zone plus épaisse (18) se situe à distance en face de la dent (6, 6a) respectivement suivante.

10. Cylindre d'alimentation selon l'une des revendications 1 à 9, comprenant respectivement un espace de réception de copeaux entre ses dents voisines dans le sens circonférentiel, caractérisé en ce que la zone plus épaisse (18) délimite l'espace de réception de copeaux (13) vers l'avant dans le sens de rotation (5) du cylindre d'alimentation (1).

11. Cylindre d'alimentation selon l'une des revendications 1 à 10, caractérisé en ce que les dents (6, 6a) se terminent en une pointe (7).

FIG.1

EP 0 273 172 B1

FIG.2

EP 0 273 172 B1